Europäisches Patentamt

European Patent Office

Office européen des brevets

(19)

(11) Publication number: **0 020 032**
**B1**

# EUROPEAN PATENT SPECIFICATION

(45) Date of publication of patent specification: **21.03.84**　　(51) Int. Cl.³: **B 62 D 5/06**

(21) Application number: **80301453.9**

(22) Date of filing: **02.05.80**

(54) Hydraulic power assisted steering system.

(30) Priority: **25.05.79 GB 7918438**

(43) Date of publication of application:
**10.12.80 Bulletin 80/25**

(45) Publication of the grant of the patent:
**21.03.84 Bulletin 84/12**

(84) Designated Contracting States:
**DE FR IT NL SE**

(56) References cited:
**GB - A - 1 432 555**
**GB - A - 1 465 901**
**GB - A - 1 470 975**

(73) Proprietor: **CAM GEARS Limited**
**45, Wilbury Way Hitchin**
**Hertfordshire SG4 0TU (GB)**

(72) Inventor: **Frederick, John Adams**
**"Pelba" 27 Princes Road**
**Clevedon Avon (GB)**

(74) Representative: **Walters, Frederick James et al,**
**Urquhart-Dykes & Lord 47 Marylebone Lane**
**London W1M 6DL (GB)**

Courier Press, Leamington Spa, England.

## Hydraulic power assisted steering system

This invention relates to an hydraulic power assisted steering system. More particularly, the invention concerns such a system in which the assistance pressure is controlled by a servo control valve comprising two valve elements which are displaceable relative to each other and are subject to restraint by elastic torque means, usually in the form of a torque rod, and in which fluid pressure from an appropriate source reacts on clutch means which is operative between the two valve elements and serves to resist relative displacement of those two elements — the resistance which is effected by the clutch means being a function of the fluid pressure which is applied to the clutch means from the fluid pressure source. Examples of power assisted steering systems as above described are disclosed in U.K. Patent Specification No. 1,432,555 and in our U.K. Patent Specifications Nos. 1,470,975 and 1,465,901 in which the valve elements are in the form of two relatively rotatable valve components which are subject to restraint by an elastic torque rod and relative rotation between which determines the flow of fluid under pressure from the pressure source to power assistance means (usually a double acting piston and cylinder device) of the steering system while the pressure source additionally communicates with the clutch means which is operative between the two relatively rotatable valve components. The clutch means in the prior proposals is in the form of detent means which is responsive to the fluid pressure which is applied thereto and acts to resist the relative rotation of the two valve components by reason of inter-acting surfaces of the detent means being urged (by the source pressure) into engagement so that the resistance is a function of the source pressure and of the profiles of the inter-acting surfaces of the detent means. In U.K. Patent No. 1,432,555 there is disclosed the possibility of providing a valve between the clutch means and the fluid pressure source for controlling fluid pressure available from the source to the clutch means.

In known systems as above described the source pressure may be derived from an engine driven pump whereby the output from the pump is proportional to engine speed so that, as discussed in our U.K. Patent Specification No. 1,470,975, when the engine is idling or at relatively low speed the clutch means may be disengaged and relative rotation between the valve components is resisted solely by the elastic torque means whereas when the engine is running at high speed the clutch means may be subjected to considerable fluid pressure and increasingly resist relative rotation between the valve components to an extent whereby those components may effectively become locked together (the steering system then being responsive wholly to a manual input and no power assistance is provided). The aforementioned conditions whereby the clutch means is disengaged when the vehicle engine is running at low speed or idling and progressively engages as the engine speed increases are desirable provided that such variations in engine speed are related to corresponding variations in vehicle speed (since it is accepted that maximum power assistance is desirable when the vehicle is at low speed, for example during parking manoeuvres, whereas minimum power assistance is required when the vehicle is running at high speed). However it is found that occasionally the vehicle engine is running at high speed while the vehicle is at low speed (such as during a parking manoeuvre with a high revving engine) and in the prior proposals this could correspond with the undesirable effect that the power assistance available is diminished even though the vehicle is slow moving in a parking manoeuvre. In a further known system, such as is disclosed in our U.K. Patent Specification No. 1,465,901, the source pressure may be derived from a pump the output of which is proportional to vehicle speed whereby at low vehicle speed (or when the vehicle is stationary) the clutch means is subjected to low fluid pressure so that power assistance is readily available by relative rotation between the valve components while at higher vehicle speeds the clutch means can be subjected to considerable fluid pressure so that the valve components are increasingly restrained from relative rotation (and may effectively become locked together as mentioned above so that no power assistance is available). For some steering gear designs the possibility of a complete loss of power assistance when the vehicle is at high speed may be undesirable.

It is an object of the present invention to provide a relatively simple and inexpensive modification to steering systems similar to that disclosed in U.K. Patent Specification No. 1432555 and in our U.K. Specifications Nos. 1,470,975 and 1,465,901, whereby a predetermined proportion of power assistance for a steering manoeuvre is available irrespective of the maximum pressure provided by the fluid pressure source.

According to the present invention there is provided an hydraulic power assisted steering system in which the assistance pressure is controlled by a servo control valve comprising two valve elements which are displaceable relative to each other and are subject to restraint by elastic torque means; a source of fluid under pressure, fluid pressure from which reacts on clutch means operative between the two valve elements, said clutch means resisting relative displacement of the two elements and the resistance effected thereby being a function of the fluid pressure which is applied thereto from the source; auxiliary valve means interposed in the system between the source and the clutch means and controlling fluid pressure available from the source to the clutch means characterised in that the auxiliary valve means is responsive to fluid pressure applied thereto from the source and reacts in response to variations in that fluid pressure to close fluid pressure communication between the source and the clutch means when the source pressure attains a predetermined value so that the clutch means provides a maximum resistance to relative displacement of the two elements which is less than that consistent with the two elements being substantially locked together.

Desirably the auxiliary valve means comprises a displaceable component which is biased to a condition in which maximum communication is available for fluid pressure between the source and the clutch means and which component is displaceable against its biasing to decrease the fluid pressure available to the clutch means by the reaction on the component of fluid pressure from the source when that fluid pressure attains a predetermined value.

Similar to the arrangement disclosed in our U.K. Patent Specification No. 1,470,975, it is preferred that the assistance/servo motor (usually in the form of a double acting piston and cylinder device as aforementioned) of the steering system is supplied by the fluid pressure source, such supply being branched from the supply to the clutch means (at a position upstream of the auxiliary valve means) and being subject to the control of the servo control valve. The source of fluid under pressure will usually be derived from an engine driven pump as aforementioned and since the auxiliary valve means is pressure sensitive it will be apparent that the system of the invention is particularly, but not essentially, suitable for use with a constant volume (variable pressure) output pump.

One embodiment of an hydraulic power assisted steering system constructed in accordance with the present invention will now be described, by way of example only, with reference to the accompanying illustrative drawings in which:—

Figure 1 schematically illustrates the system in which the servo control and clutch means have been shown in part section and in which, for convenience, the assistance/servo motor (such as a conventional double acting piston and cylinder device) has been omitted;

Figure 2 is a section through the servo control valve taken on the line A—A in Figure 1 to illustrate the clutch means;

Figure 3 is a sectional view of an auxiliary valve means which is incorporated in the system of Figure 1, and

Figure 4 shows an alternative and modified form of auxiliary valve means which can be substituted for the valve means shown in Figure 3.

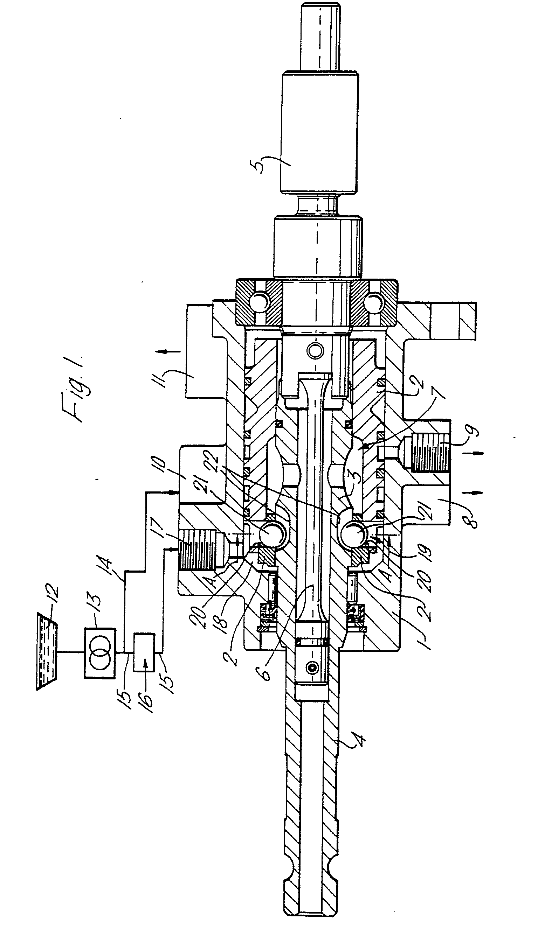

The system shown in Figure 1 has a stationary valve housing 1 in which is a rotatable outer valve element 2 within which, and extending from the bore of the housing 1, is rotatably mounted an inner valve element 3. The valve element 3 includes an input shaft 4 which is to be rotated by the steering column of a vehicle in which the system is fitted. Connected for positive rotation with the valve element 2 is a pinion 5 which engages with the rack of a rack bar (not shown) displacement of which in response to rotation of the pinion 5 effects a steering manoeuvre in conventional manner. Associated with the rack bar is a power assistance/servo motor such as a double acting piston and cylinder device the admission and exhausting of fluid pressure to and from which provides power assistance in conventional manner. Located within and extending axially through a bore in the valve element 3 is an elastic torque rod 6 which is connected at one end to the valve element 3 and at its other end to the pinion 5 (and thereby to the valve element 2) in conventional manner.

The valve elements 2 and 3 form a servo controlled valve having conventional pressure chamber and passages (indicated at 7) generally provided for such valves and usually in the form of circumferential or axially co-operating grooves and slits to connect the power assistance/servo motor by way of outlet ports 8 and 9 alternatively to fluid pressure at an input port 10 or an exhaust port 11 (communicating by way of a return line to a fluid reservoir 12).

Fluid pressure to the port 10 is derived from a pump 13 driven by the engine of a vehicle to which the steering system is fitted, such a pump drawing hydraulic fluid from the reservoir 12. The output from pump 13 is branched through lines 14 and 15, line 14 communicating with the inlet port 10 and thereby serving to actuate the power assistance/servo motor under control of the valve 7. The line 15 communicates by way of an auxiliary valve 16 and a port 17 with an annular pressure chamber 18 formed between the outer valve element 2 and the housing 1. Located within the chamber 18 is a fluid pressure responsive clutch device 19 which is engageable between the inner and outer valve elements 2 and 3. The clutch device 19 is similar in construction and general operation to that disclosed in our U.K. Patent Specification No. 1,470,975 and comprises radial bores 20 in the element 3 which communicate with the chamber 18 and in which are slidable steel balls 21. As shown in Figure 2 two diametrically opposed steel balls 21 are provided which are displaceable in their respective bores 20 to be engaged with generally V-sectioned recesses 22 in the valve element 3. As is known from the discussion in our U.K. Patent Specification No. 1,470,975 the balls 21 are urged radially inwardly in response to an increase in fluid pressure in the chamber 18 to engage the grooves 22 and thereby resist relative rotation between the valve elements 2 and 3 between which the balls 21 co-operate. The valve elements 2 and 3 will thereby become increasingly locked together as fluid pressure increases in the chamber 18. During such restraint to relative rotation between the elements 2 and 3, the torque rod 6 is increasingly shunted out and thereby the operation of the control valve 7 becomes increasingly less torque sensitive to cause less power assistance to be available (and thereby greater manual effort being required) to effect a steering manoeuvre.

The pump 13 is driven by the vehicle engine and provides a substantially constant volume output so that the fluid pressure in lines 14 and 15 varies in accordance with the demand on the pump.

Following from the teaching in our U.K. Patent Specification No. 1,470,975, the port 17 which feeds the clutch device 19 would communicate directly with the output from the pump 13 and consequently the hydraulic pressure in chamber 18 would always be directly proportional to the demand on the pump 13. The effect of this latter arrangement may be that when the demand on the pump is sufficiently high (for example during actuation of the assistance/servo motor) the fluid pressure acting on the balls 21 in the clutch device may be sufficient to positively interlock the elements 2 and 3 so that they rotate in unison in response to a steering manoeuvre and thus the valve 7 becomes inoperative and the steering system is wholly manual. To alleviate this latter possibility and in accordance with the present invention there is provided in the line 15 the auxiliary valve 16 as shown in Figure 3 which primarily serves to determine the maximum hydraulic pressure to which the clutch device 19 is subjected in the chamber 18, so that such pressure is less than that which is required for the clutch device effectively to lock the valve elements 2 and 3 together.

The valve 16 comprises a spool 23 axially slidable in a spool cylinder 24 formed by a spool housing 25 which can conveniently be carried by or integral with the valve housing 1 or a housing of the pump 13. The spool 23 has an annular recess 26 and is biased by a spring 27 so that the line 15 communicates through the recess 26 to direct fluid pressure from the pump to the port 17. Formed between an end face of the spool 23 and an end of the spool cylinder 24 is a spool chamber 28 which is in constant communication by way of line 15a with the line 15 at a position upstream of the spool 23 and downstream of the pump 13. The spool 23 is biased by spring 27 so that the chamber 28 is normally in a contracted condition. As the fluid pressure output from pump 13 increases it will be apparent from Figure 3 that fluid pressure increases in the line 15 and thereby in the chamber 28 to urge the spool 23 in a sense which displaces it leftwardly in Figure 3 against its spring biasing. During such displacement of the spool 23 the line 15 is progressively closed by the full diameter of the spool to communication with the recess 26; consequently the fluid pressure supplied to the clutch device 19 will progressively decrease as fluid pressure increases in the chamber 28 until, at a predetermined pressure, the spool 23 is sufficiently displaced to close line 15 and thereby determine the maximum pressure to which the balls 21 are subjected (and thereby the maximum interlocking effect which the balls have between the valve elements 2 and 3). Desirably the valve 16 is arranged so that the line 15 closes when relative rotational displacement is permissible between the valve elements 2 and 3 in response to the application of a reasonable torque to the input shaft 4.

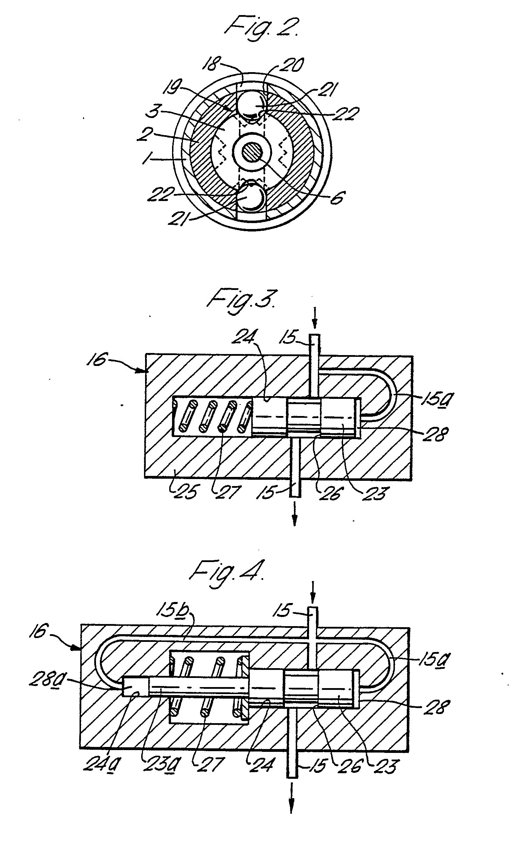

In the modification of the auxiliary valve 16 as shown in Figure 4 the spool 23 is subjected to a fluid force differential for which purpose the spool has a spool rod 23a slidable in a reduced diameter spool cylinder part 24a. Formed between the end face of the spool rod 23a and the end of the spool cylinder part 24a is a second spool chamber 28a which is in constant communication by way of line 15b with the line 15 at a position upstream of the spool cylinder 24 and downstream of the pump 13. The pressurised area of the end face of the spool rod 23a in the chamber 28a is less than the pressurised area of the end face of the spool in the chamber 28 and since both chambers 28 and 28a are subjected to the same fluid pressure from pump 13 the spool will be subjected to a fluid force differential which, when sufficient, will cause displacement of the spool leftwardly in Figure 4 against the biasing spring 27 with similar effect on the system as that previously described for the valve in Figure 3.

**Claims**

1. Hydraulic power assisted steering system in which the assistance pressure is controlled by a servo control valve comprising two valve elements (2, 3) which are displaceable relative to each other and are subject to restraint by elastic torque means (6); a source (13) of fluid under pressure, fluid pressure from which reacts on clutch means (19) operative between the two valve elements (2, 3), said clutch means (19) resisting relative displacement of the two elements and the resistance effected thereby being a function of the fluid pressure which is applied thereto from the source; auxiliary valve means (16) interposed in the system between the source and the clutch means and controlling fluid pressure available from the source to the clutch means (19) characterised in that the auxiliary valve means (16) is responsive to fluid pressure applied thereto from the source and reacts in response to variations in that fluid pressure to close fluid pressure communication between the source (13) and the clutch means (19) when the source pressure attains a predetermined value so that the clutch means (19) provides a maximum resistance to relative displacement of the two elements (2, 3) which is less than that consistent with the two elements (2, 3) being substantially locked together. .

2. A system as claimed in claim 1 characterised in that the auxiliary valve means (16) comprises a displaceable component (23) which is biased to a condition in which maximum communication is available for fluid pressure between the source (13) and the clutch means (19) and which component (23) is displaceable against its biasing to decrease the fluid pressure available to the clutch means (19) by the reaction on the component (23) of fluid pressure from the source when that fluid pressure attains a predetermined value.

3. A system as claimed in claim 2 characterised in that the auxiliary valve means (16) comprises a spring biased spool valve (23, 25, 27).

4. A system as claimed in any one of the preceding claims characterised in that the assistance/servo motor of the steering system is supplied by said source (13), said supply being branched from the supply to the clutch means (19) at a position upstream of the auxiliary valve means (16) and being subject to the control of the servo control valve (2, 3).

5. A system as claimed in any one of the preceding claims characterised in that the two valve elements (2, 3) are relatively rotatable and subject to restraint by an elastic torque rod (6) and wherein the clutch means (19) comprises detent means (21, 22) which resist the relative rotation by reason of interengaging surfaces of the detent means being urged into engagement by the fluid pressure which is determined by the auxiliary valve means (16) from the source pressure.

## Revendications

1. Système de direction assistée à commande hydraulique dans lequel la pression d'assistance est commandée par une soupape à servo-commande comprenant deux organes de soupape (2, 3) qui peuvent se déplacer l'un par rapport à l'autre et sont retenus par des dispositifs de torsion élastiques (6); une source (13) de fluide sous pression dont la pression réagit sur des dispositifs d'embrayage (19) pouvant fonctionner entre les deux organes de soupape (2, 3), ces dispositifs d'embrayage résistant au déplacement relatif des deux organes et la résistance ainsi obtenue étant fonction de la pression de fluide appliquée par la source; des dispositifs de soupape auxiliaires (16) interposés dans le système entre la source et les moyens d'embrayage pour commander la pression de fluide disponible entre la source et les dispositifs d'embrayage (19) système caractérisé en ce que les dispositifs de soupape auxiliaires (16) répondent à la pression de fluide qui leur est appliquée par la source et réagissent aux variations de cette pression de fluide pour fermer la communication de fluide entre la source (13) et les dispositifs d'embrayage (19), lorsque la pression de la source atteint une valeur prédéterminée, de façon que les dispositifs d'embrayage (19) fournissent une résistance maximum au déplacement relatif des deux éléments (2, 3), cette résistance étant inférieure à celle compatible avec le verrouillage parfait des deux organes (2, 3).

2. Système selon la revendication 1, caractérisé en ce que les dispositifs de soupape auxiliaires (16) comprennent un élément mobile (23) poussé dans une position correspondant à la communication maximum disponible de la pression de fluide entre la source (13) et les dispositifs d'embrayage (19), cet élément (23) pouvant se déplacer contre la force qui le pousse pour diminuer la pression de fluide disponible appliquée aux dispositifs d'embrayage (19), par réaction sur l'élément (23) de la pression de fluide provenant de la source lorsque cette pression de fluide atteint une valeur prédéterminée.

3. Système selon la revendication 2, caractérisé en ce que les dispositifs de soupape auxiliaires (16) comprennent une soupape à bobine chargée par un ressort (23, 25, 27).

4. Système selon l'une quelconque des revendications 1 à 3, caractérisé en ce que le servo-moteur d'assistance du système de direction est alimenté par la source (13), cette source étant branchée à l'alimentation des dispositifs d'embrayage (19) en un point situé en amont des dispositifs de soupape auxiliaires (16), et se trouvant soumise à la commande de la soupape à servo-commande (2, 3).

5. Système selon l'une quelconque des revendications 1 à 4, caractérisé en ce que les deux organes de soupape (2, 3) peuvent tourner l'un par rapport à l'autre et sont retenus par une tige de torsion élastique (6), les moyens d'embrayage (19) comprenant des dispositifs de détente (21, 22) résistant à la rotation relative du fait que les surfaces d'engagement de ces dispositifs de détente sont poussées en prise par la pression de fluide déterminée par les dispositifs de soupape auxiliaires (16) à partir de la source de pression.

## Patentansprüche

1. Hydraulisch kraftverstärktes Lenksystem mit einem Servoventil zur Steuerung des kraftverstärkenden Druckes, das zwei relativ zueinander bewegliche und von einem elastischen Drehmoment-Glied (6) bewegungsbegrenzte Ventilglieder (2, 3) aufweist, mit einer Druckmittelquelle (13), mit auf den Druck des Druckmittels ansprechenden, zwischen den Ventilgliedern wirksamen Kupplungsgliedern (19), durch die eine Relativbewegung zwischen beiden Ventilgliedern zu unterbinden ist, wobei dieses Unterbinden eine Funktion des Druckes des von der Druckmittelquelle gelieferten Druckmittels ist, und mit im System zwischen der Druckmittelquelle und den Kupplungsgliedern (19) befindlichen Hilfs-Ventilgliedern (16) zwecks Steuerung des auf die Kupplungsglieder wirkenden Druckmitteldruckes, dadurch gekennzeichnet, daß die Hilfs-Ventilglieder (16) auf den Druck der Druckmittelquelle ansprechen und in Abhängigkeit von Änderungen dieses Druckes die Druckverbindung zwischen der Druckmittelquelle (13) und den Kupplungsgliedern (19) schließen, sobald der Druck der Druckmittelquelle einen vorbestimmten Wert erreicht, so daß die Kupplungsglieder (19) einen maximalen Widerstand gegen eine Relativbewegung der beiden Ventilglieder (2, 3) aufweisen, der kleiner ist als der dem einer direkten Sperrung beider Ventilglieder (2, 3) entsprechende Widerstand.

2. Lenksystem nach Anspruch 1, dadurch gekennzeichnet, daß die Hilfs-Ventilglieder (16) eine verstellbare Ventil-Komponente (23) aufweisen, die in einer eine maximale Druckverbindung zwischen der Druckmittelquelle (13) und den Kupplungsgliedern (19) ermöglichenden Stellung vorgespannt gehalten ist, und daß die Ventil-Komponente zwecks Verkleinerung des für die Kupplungsglieder verfügbaren Druckmitteldruckes gegen diese Vorspannung infolge der Rückwirkung des von der Druckmittelquelle gelieferten Druckmitteldruckes beim Erreichen des vorbestimmten Wertes verschiebbar ist.

3. Lenksystem nach Anspruch 2, dadurch gekennzeichnet, daß die Hilfs-Ventilglieder (16) ein durch eine Feder vorgespanntes Steuerkolben-Ventil umfassen.

4. Lenksystem nach einem der vorhergehenden Ansprüche, dadurch gekennzeichnet, daß durch die Druckmittelquelle (13) auch der das Lenksystem unterstützende Servomotor gespeist ist, und daß seine Speiseleitung in bezug auf die Hilfs-Ventilglieder (16) stromauf abgezweigt und über das Servoventil (2, 3) geführt ist.

5. Lenksystem nach einem der vorhergehenden Ansprüche, dadurch gekennzeichnet, daß die beiden Ventilglieder (2, 3) zueinander drehbeweglich angeordnet und von einem elastischen Drallstab (6) bewegungsbegrenzt sind, und daß die Kupplungsglieder (19) Rastglieder (21, 22) umfassen, die infolge miteinander in Eingriff gelangender Flächen aufgrund des von der Druckmittelquelle gelieferten und durch die Hilfs-Ventilglieder (16) gesteuerten Druckmitteldruckes der relativen Drehung widerstehen.

Fig. 1.

0 020 032

*Fig. 2.*

*Fig. 3.*

*Fig. 4.*

2